(19) Europäisches Patentamt
European Patent Office
Office européen des brevets

(11) Publication number: **0 051 967**
**A1**

(12) **EUROPEAN PATENT APPLICATION**

(21) Application number: **81305185.1**

(22) Date of filing: **30.10.81**

(51) Int. Cl.³: **C 02 F 1/76**, C 02 F 9/00

(30) Priority: **30.10.80 US 202266**

(43) Date of publication of application: **19.05.82**
**Bulletin 82/20**

(84) Designated Contracting States: **BE DE FR GB IT LU NL SE**

(71) Applicant: **USS ENGINEERS AND CONSULTANTS, INC.,**
**600 Grant Street, Pittsburgh Pennsylvania 15230 (US)**

(72) Inventor: **Mihelic, Edward Louis, 3405 Douglas Drive, Murrysville Pennsylvania 15668 (US)**
Inventor: **Schlosberg, Samuel Basil, 110 Briar Crest Drive, Monroeville Pennsylvania 15146 (US)**

(74) Representative: **Spencer, Graham Easdale et al, A.A. Thornton & CO Northumberland House 303-306, High Holborn, London WC1V 7LE (GB)**

(54) **Chlorination of wastewater.**

(57) Wastewater, particularly from a recycle gas-scrubbing and gas-cooling system of a blast furnace, is treated in a two-stage chlorination unit, the first stage including a chlorine addition at a pH of 8.5 to 10, and the second stage continuing the chlorination reaction at a pH of 6 to 8. The oxidation-reduction potential in the second stage is used to control the chlorine addition to the first stage. Various contaminants, notably nitrogen-containing compounds, are destroyed in the chlorination steps. After chlorination, the process stream is preferably passed through activated carbon to remove organics.

EP 0 051 967 A1

# CHLORINATION OF WASTEWATER

The present invention relates to the chlorination of wastewater containing ammonia, cyanide and phenol.

The steps involved in the removal of ammonia from wastewater by chlorination are

$$Cl_2 + H_2O \text{ -- } HOCl + HCl$$

$$NH_4^+ + HOCl\text{--}NH_2Cl + H_2O + H^+$$

$$2NH_2Cl + HOCl\text{-- } N_2 + 3HCl + H_2O$$

To favor this sequence and to avoid formation of the undesirable side products, di- and trichloramines, the chlorination is conducted at a pH of 6.0 and 8.0.

The alkaline chlorination of cyanide-bearing wastewaters involves the reaction of cyanide to form cyanogen chloride, which at a pH above 8.5 is hydrolyzed to cyanate. The rate of hydrolysis increases with increasing pH. At pH below 8.5, the rate is slow, and the escape of toxic cyanogen

chloride to the atmosphere is of some concern.

Therefore, it is evident that at a pH favoring the removal of ammonia, the hydrolysis of cyanogen chloride to cyanate is suppressed. This point becomes a consideration in the chlorination of wastewaters that contain both of these contaminants.

According to the present invention, there is provided a method of chlorinating wastewater containing ammonia, cyanide and phenol, comprising adding a chlorinating compound to the wastewater in a first vessel, maintaining the pH in the first vessel at 8.5 to 10, passing the wastewater to a second vessel, maintaining the pH in the second vessel at 6 to 8, and controlling the addition of said chlorinating compound in response to the redox potential in the second vessel so as to maintain said redox potential at + 625 millivolts to + 750 millivolts.

The high pH chlorination in the first vessel favors hydrolysis of cyanide and thiocyanate to cyanate and the lower pH chlorination in the second vessel favors the hydrolysis of cyanate to ammonia and the subsequent chlorination of that ammonia.

## EXAMPLES

A pilot unit was designed on the basis of experience with a laboratory bench-scale apparatus and used to treat blast-furnace wastewater.

The unit consisted of a pretreater, a clarifier, a first-stage chlorinator vessel, a second-stage chlorinator vessel, a filter, and three carbon columns in series.

Because the blast furnace wastewater contained an average of only 0.036 mg/l of phenol, this water was spiked with sufficient phenol to give a final concentration of about 5 mg/l. This addition was made because an examination of discharge data indicated that such a concentration would result at the extreme.

The pretreater consisted of a 2 litre mixing reservoir for mixing incoming wastewater with a 1 g/l phenol solution and with an 8% sodium hydroxide solution. The clarifier was a 208-litre vessel equipped with a level-control valve, maintaining a constant level in the clarifier, which controlled the flow of incoming wastewater into the mixing reservoir. A pH electrode, located in a center inlet

pipe through which the mixing reservoir overflowed into the clarifier, sensed the pH of the reservoir effluent. This pH signal was fed to a controller which controlled a pump feeding the sodium hydroxide solution to the mixing reservoir. Sludge was removed from the bottom of the clarifier and pretreated wastewater from the top of the clarifier was transferred to the first-stage chlorinator vessel by a pump.

The first-stage chlorinator vessel was equipped with a stirring apparatus and had a working volume of 25 litres. A pH electrode in the vessel transmitted a signal to a pH controller which controlled a pump supplying 3-normal sulfuric acid to this stage. The vessel also contained electrodes to record the pH and redox potential (ORP) of the water. Sodium hydrochlorite solution was pumped into the first-stage chlorinator vessel. Water from this vessel overflowed into the second-stage chlorinator vessel.

The second-stage chlorinator vessel was also equipped with a stirring apparatus and had a working volume of 50 l. A pH electrode in the vessel sensed the pH and transmitted a signal to a pH controller

which controlled a pump supplying 3N $H_2SO_4$ to this stage. The vessel also contained an electrode to record the pH of the solution. An ORP electrode in the vessel fed a signal to a proportioning controller which controlled the rate of pumping of NaOCl solution to the first-stage chlorinator vessel. This signal was also recorded on a continuous chart. A small side stream of water from the second-stage chlorinator vessel was fed to an analyzer to monitor the treated water for residual free chlorine. Chlorinated water was transferred by a pump into the filter and carbon columns.

The filter was a 13cm inside diameter by 1.8m column containing a 40cm bed of sand overlayed by 50cm of granular anthracite coal. Water from the filter column flowed through a succession of three similar columns that contained 40cm beds of activated carbon. Each column was provided with valves to permit bypassing and backwashing of the beds, and to sample effluent from each column. Pressure drop across each column was shown by pressure gauges.

The wastewater feed to the pilot unit was sampled and analyzed. At the start of the pilot unit studies, water was introduced at a rate of about 1.24

litres per minute and prior to contact with hypochlorite in the first-stage reactor, the pH was adjusted to 9.5 and phenol was added to give a concentration of about 5 mg/l. The water temperature was 38 to 42°C.

The water was contacted with hypochlorite in the first-stage vessel at a controlled pH of 9.5 ±0.2 for twenty minutes, followed by second-stage reaction for twenty minutes at a controlled pH of 7.5 ±0.2, and a controlled ORP in the range (+)625 to (+)750 millivolts. About 1.0 l/min of effluent from the second stage was conducted to the filter and then to the carbon columns for a superficial contact time of fourteen minutes. Retention time in the first stage can be from about fifteen to twenty-five minutes.

Under these experimental conditions the pilot unit was operated continuously on a 3-shifts-per-day basis, five days per week. The pH and ORP in each stage and the residual free chlorine contents were recorded at 15-minute intervals. The wastewater feed rates to the chlorination system and the carbon columns were checked at the start, once during, and at the end of each shift.

It was found that there is a correlation between the ORP in the second chlorinator and the residual free chlorine content in the effluent from the second chlorinator. This is demonstrated in the graph which constitutes the accompanying drawing.

Eighteen samples of blast furnace wastewater gave the following average concentrations, in mg/l, of major chlorine demanders:

| | | |
|---|---|---|
| Nitrogen in the form of ammonia, | $NH_3$-N | 76 |
| Total cyanide, | CN-T | 4.71 |
| Cyanide amenable to chlorination, | CN-A | 1.07 |
| Phenol | | 0.036 |
| Cyanate, | CNO | 10.4 |
| Thiocyanate, | SCN | 7.54 |
| Total suspended solids, | TSS | 25 |

The average analyses, expressed in mg/l, obtained on the chlorinated effluent (second-stage effluent) with twenty-minute retention time in both chlorination stages were:

| | |
|---|---|
| $NH_3$-N | 0.38 |
| CN-T | 0.90 |
| Phenol | 0.064 |
| CNO | 11.16 |
| TSS | 84 |
| Dissolved Solids, DS | 5296 |
| Conductivity | 4900 microsiemens |

After filtration and the carbon treatment the following analytical results, expressed in mg/l, were obtained:

| | |
|---|---|
| $NH_3$-N | 0.31 |
| CN-T | 1.01 |
| Phenol | 0.049 |
| CNO | 11.1 |
| SCN | 0.12 |
| Chloride, Cl | 1866 |
| Sulfate, $SO_4$ | 925 |
| Fluoride, F | 29 |
| TSS | 4 |
| Dissolved Solids (DS) | 5198 |
| Conductivity | 4780 microsiemens |
| Residual $Cl_2$, total | 0.11 |

The retention time in the second stage was changed to double its original value of twenty minutes. The forty-minute retention time was to allow sufficient time for the hydrolysis of CNO to ammonia and for the chlorination of the ammonia formed. Concurrently, the wastewater was spiked with 15 mg/l phenol to study the effect of peak phenol loading on the treatment process. The changes did not affect the control mechanism of the pilot unit.

We may employ a retention time in the second stage of at least thirty minutes; more than fifty minutes retention time will probably not be economic.

The chlorinated effluent after the forty-minute second-stage retention showed the following average analysis, in mg/l:

| | |
|---|---|
| $NH_3$-N | 0.21 |
| Phenol | 0.032 |
| CNO | 3.11 |
| TSS | 23 |
| DS | 4178 |
| Conductivity | 4000 microsiemens |

After final carbon treatment, the following average analyses, expressed in mg/l, were obtained:

| | |
|---|---|
| $NH_3$-N | 0.26 |
| CN-T | 0.95 |
| Phenol | 0.007 |
| CNO | 2.11 |
| SCN | 0.03 |
| Cl | 1413 |
| $SO_4$ | 616 |
| F | 25 |
| TSS | 3 |
| DS | 4161 |
| Conductivity | 3800 microsiemens |

Under suddenly applied peak phenol loading (sudden rise to ~15 mg/l), the residual phenol after treatment did not exceed the values obtained when the initial phenol concentration in the water was 5 mg/l. No control problem was observed as a result of the peak phenol loading.

The extended (forty-minute) Stage 2 retention time reduced the residual cyanate level by 80% of that found during the twenty-minute retention time. The 2.11 mg/l of residual cyanate has an $NH_3$-N equivalent of 0.70 mg/l. Thus, added to the 0.26 mg/l of $NH_3$-N found above a total of 0.96 mg/l of $NH_3$-N

would obtain when the sample is acid-stabilized before analysis in accordance with the standard methods.

There was effective removal across the carbon beds of total organic carbon (TOC) and phenol. TOC was reduced to a few mg/l and phenol to less than 0.005 mg/l as shown below.

Carbon Column Performance

(Phenol Concentration Before Chlorination = 5 mg/ℓ)

| Test | Influent | | Filler Effluent | | Column 1 | | Column 2 | | Column 3 | |
|---|---|---|---|---|---|---|---|---|---|---|
| | TOC | Phenol | TOC | Phenol | TOC | Phenol | TOC | Phenol | TOC | Phenol |
| 1 | 51 | 0.054 | 19 | 0.055 | 39 | 0.035 | 33 | 0.026 | 13 | 0.016 |
| 2 | 25 | 0.016 | 21 | 0.015 | 17 | 0.021 | 13 | <0.005 | 10 | <0.005 |
| 3 | 27 | 0.009 | 15 | 0.009 | 13 | 0.005 | 12 | <0.005 | 11 | <0.005 |
| 4 | 13 | 0.014 | 14 | 0.020 | 12 | <0.005 | 8 | <0.005 | 10 | <0.005 |
| 5 | 9 | 0.010 | 6 | <0.005 | 5 | <0.005 | 4 | <0.005 | 2 | <0.005 |
| 6[a)] | ND[b)] | 0.115 | ND | 0.009 | ND | <0.005 | ND | <0.005 | ND | <0.005 |

a) Phenol concentration before chlorination - 15 mg/ℓ.
b) Not determined.

Scale-formation problems in the pilot unit led to the conclusion that the wastewater may need to be softened prior to chlorination. Softening involved precipitating hardness salts by increasing the amount of NaOH added to raise the pH to 10.5 to 11. Sufficient $H_2SO_4$ is added in the first chlorinator vessel to reduce the pH to the desired range of 8.5 to 10.

A comparison of the average analyses for softened wastewater, first-stage chlorination effluent and second-stage effluent during this period is shown below.

| Compound | Analysis, mg/l | | |
|---|---|---|---|
| $NH_3$-N | 65.3 | 0.95 | 0.34 |
| CN-T | 1.45 | 0.84 | 0.82 |
| phenol | 3.68 | 0.058 | 0.036 |
| CNO | 17.30 | 2.80 | 0.62 |
| SCN | 1.98 | 0.10 | 0.068 |
| TSS | 90. | 21. | 5. |

These data show that $NH_3$-N, phenol, and SCN are 95 to 98% destroyed in the first-stage chlorination, whereas 84% of CNO is removed, requiring second-stage chlorination to achieve 96% removal.

Because very high contaminant concentrations might occur in plant operations on some occasions, it was desired to test the control response of the system to unusually high loads. During seven operating shifts, the water was spiked with contaminants to give a peak concentration, in mg/l, as follows: $NH_3$-N, 370; phenol, 16; CN-T, 16; SCN, 60; and CNO, 120. Observation of the control (ORP) recorder for closeness of control showed that there was no difficulty in responding to the higher concentrations, even when the increase (or decrease) happened suddenly (shock loading). The second-stage effluent-water quality was comparable with that obtained during normal contaminant loads except for residual CN-T which was 3.58 mg/l. This high residual CN-T suggests that some of the added simple cyanide was converted to complex cyanide not amenable to chlorination. These analytical data are summarized below.

| Analysis, mg/l | | | |
|---|---|---|---|
| Compound | | | |
| $NH_3$-N | 378.0 | 2.70 | 0.63 |
| CN-T | 14.3 | 6.82 | 3.58 |
| phenol | 17.6 | 0.080 | 0.046 |
| CNO | 116.0 | 3.01 | 0.03 |
| SCN | 49 | 0.034 | 0.034 |
| TSS | 75 | 32 | 22 |

However when the pilot unit was operated with control of hydrochlorite addition in response to first-stage ORP, control of the system was not achieved. The lack of control was evidenced on the control recorder as a constantly meandering ORP signal. In addition, analyses of the first- and second-stage effluents showed higher than normal phenol concentrations.

Claims:-

1. Method of chlorinating wastewater containing ammonia, cyanide and phenol, characterized by adding a chlorinating compound to the wastewater in a first vessel, maintaining the pH in the first vessel at 8.5 to 10, passing the wastewater to a second vessel, maintaining the pH in the second vessel at 6 to 8, and controlling the addition of said chlorinating compound in response to the redox potential in the second vessel so as to maintain said redox potential at + 625 millivolts to + 750 millivolts.

2. Method as claimed in claim 1, characterized by passing the wastewater from the second vessel through activated carbon to remove residual contaminants.

3. Method as claimed in claim 1 or claim 2, characterized by maintaining the pH in the first vessel at 9 to 9.5.

4. Method as claimed in any preceding claim, characterized by maintaining the pH in the second vessel at 7 to 7.5.

0051967



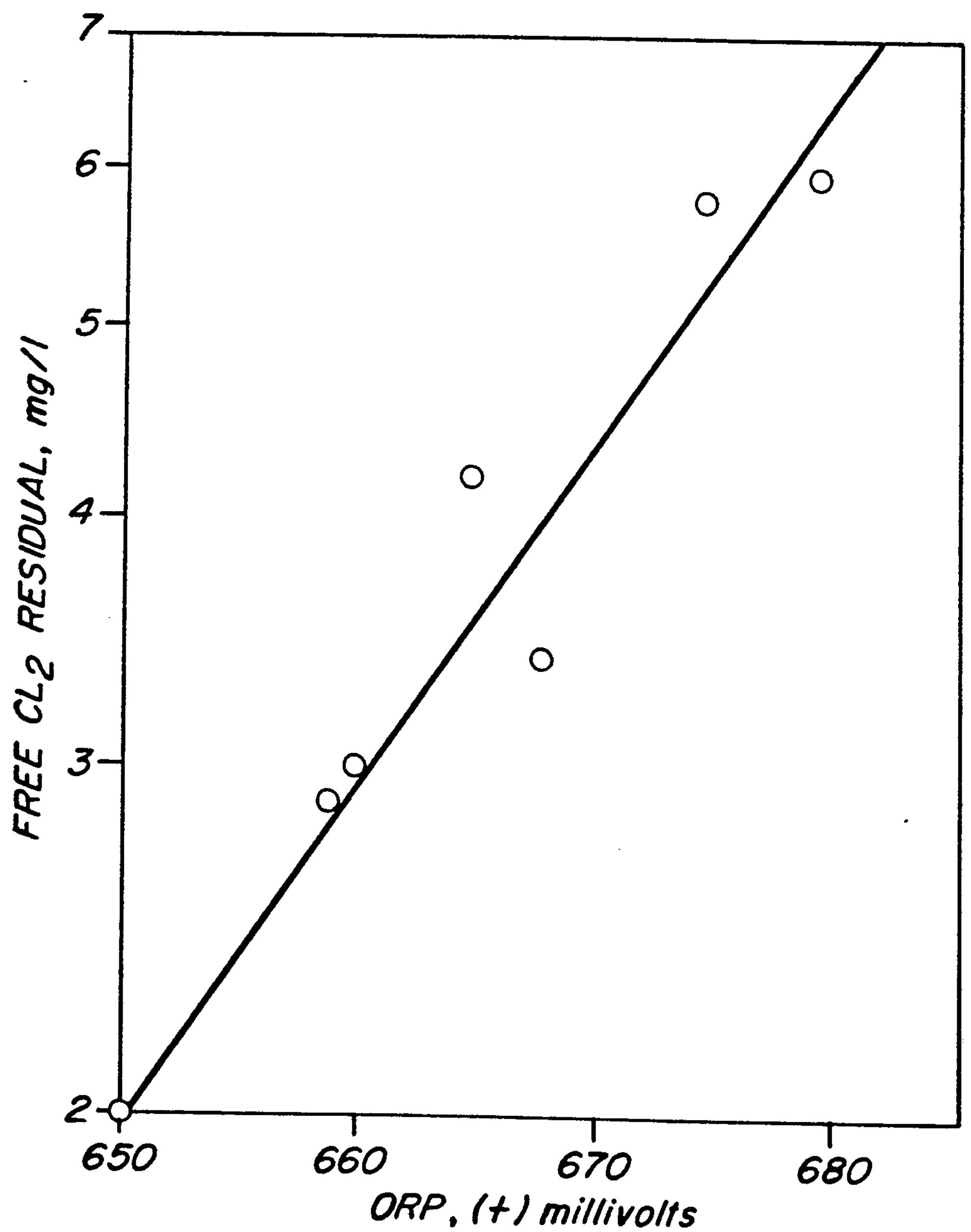

European Patent Office

# EUROPEAN SEARCH REPORT

0051967

Application number

EP 81 30 5185

## DOCUMENTS CONSIDERED TO BE RELEVANT

| Category | Citation of document with indication, where appropriate, of relevant passages | Relevant to claim |
|---|---|---|
| A | CH - A - 444 064 (R. ABEND) | |
| A | DE - B - 1 301 280 (R. ABEND) | |
| A | US - A - 3 617 581 (CHUN-SHAW W. et al.) | |
| A | US - A - 4 105 545 (A. MULLER et al.) | |
| | ---- | |

CLASSIFICATION OF THE APPLICATION (Int. Cl. 3)

C 02 F 1/76
C 02 F 9/00

TECHNICAL FIELDS SEARCHED (Int.Cl. 3)

C 02 F 1/76
C 02 F 9/00

CATEGORY OF CITED DOCUMENTS

X: particularly relevant if taken alone
Y: particularly relevant if combined with another document of the same category
A: technological background
O: non-written disclosure
P: intermediate document
T: theory or principle underlying the invention
E: earlier patent document, but published on, or after the filing date
D: document cited in the application
L: document cited for other reasons

&: member of the same patent family, corresponding document

X The present search report has been drawn up for all claims

| Place of search | Date of completion of the search | Examiner |
|---|---|---|
| The Hague | 28-01-1982 | VAN AKOLEYEN |